# EUROPÄISCHE PATENTANMELDUNG

(11) **EP 3 812 960 A1**
(43) Veröffentlichungstag der Anmeldung: **28.04.2021**
(21) Anmeldenummer: 20198538.9
(22) Anmeldetag: 25.09.2020
(51) Int. Cl.: G06K 9/00, G06K 9/20

(54) **VERFAHREN ZUM ERFASSEN VON BILDDATEN UND ZUM BELEUCHTEN EINES ERFASSUNGSBEREICHS**

(30) Priorität: 24.10.2019 DE 102019128710
(71) Anmelder: SICK AG, 79183 Waldkirch (DE)
(72) Erfinder: Müller, Romain, 79252 Stegen (DE); Strohmeier, Dirk, 79312 Emmendingen (DE)

(57) **Zusammenfassung**

Es wird eine Beleuchtungsvorrichtung (10) zum Beleuchten eines Erfassungsbereichs (12) angegeben, die mindestens eine Lichtquelle (14, 14a) und eine Beleuchtungssteuerung (32) aufweist, die dafür ausgebildet ist, die Intensität der Beleuchtung an einen Distanzwert anzupassen. Dabei ist ein Abstandssensor (18) zum Bestimmen des Distanzwerts vorgesehen, insbesondere ein optoelektronischer Abstandssensor nach dem Prinzip des Lichtlaufzeitverfahrens, und die Beleuchtungssteuerung (32) ist Teil der Beleuchtungsvorrichtung (10).

## Beschreibung

Die Erfindung betrifft eine Kamera sowie ein Verfahren zum Erfassen von Bilddaten nach dem Oberbegriff von Anspruch 1 beziehungsweise 12.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine wichtige Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Für die verschiedenen Erfassungsaufgaben einer Kamera, insbesondere eine möglichst fehlerfreie Codelesung, ist eine ausreichende Beleuchtung des Codebereichs erforderlich. Dafür reicht das Umgebungslicht nur in seltenen Fällen aus, und im Falle von Lesetunneln wird das Umgebungslicht ohnehin abgeschirmt. Ist das Bild zu dunkel oder das Signal-Rausch-Verhältnis zu schlecht, so wird der Code nicht richtig gelesen oder gar nicht erst verlässlich im Bild nicht gefunden. Umgekehrt ist eine Überbelichtung ebenso zu vermeiden.

Um diese und andere Anpassungen zu ermöglichen, ist die Kamera vielfach in ein komplexes Sensorsystem eingebunden. Beispielsweise ist es bei Lesetunneln an Förderbändern üblich, die Geometrie der geförderten Objekte vorab mit einem gesonderten Laserscanner zu vermessen. Das wird genutzt, um Fokuseinstellungen, Auslösezeitpunkte, Bildbereiche mit Objekten und eben auch Helligkeitseinstellungen zu bestimmen. Der Aufwand für einen solchen Sensorverbund und die entsprechende Steuerung zur Koordination ist hoch.

Die Beleuchtung kann gepulst betrieben werden, um Bewegungsunschärfen zu verhindern. Der Pulsbetrieb dient zugleich der Energieeinsparung und bietet thermische Vorteile. Wenn aber die Blitzfolge in einer Taktfrequenz erfolgt, die das menschliche Auge noch wahrnimmt, führt dies zu einem als unangenehm empfundenen Flackern für Personen im Umfeld, im äußersten Fall sogar zu epileptischen Anfällen. Die DE 10 2010 050 577 A1 schlägt hier den Ausweg vor, zwischen den Pulsen eine Grundhelligkeit aufrechtzuerhalten so dass die Pulse weniger wahrgenommen werden.

Aus der DE 10 2018 105 301 A1 ist eine Kamera mit integriertem, ortsaufgelöstem Abstandssensor bekannt, und anhand des davon gemessenen Höhenprofils werden Kameraparameter eingestellt. Die Beleuchtung ist dabei erwähnt, aber nicht näher diskutiert. Außerdem müssen Beleuchtungsanpassungen durch die Kamera geleistet werden, die dadurch mit zusätzlichen Aufgaben belastet wird.

Die DE 10 2016 118 758 A1 offenbart einen optoelektronischen Sensor mit einem entfernungsmessenden Zusatzsensor und nimmt eine Leistungsanpassung in Abhängigkeit von dessen gemessener Entfernung vor. Auch hier liegt die Verantwortung für diese Anpassung bei der Kamera selbst.

Die US 2010/0294839 A1 offenbart einen optischen Codescanner mit automatischer Fokussierung. Die optischen Codes werden mit einer Lichtquelle beleuchtet und über eine Flüssiglinse von einem Bildsensor aufgenommen. Ein laserbasierter Entfernungsmesser bestimmt den jeweiligen Codeabstand und fokussiert die Flüssiglinse entsprechend. Anhand der Entfernungsmessung wird auch die Intensität der Lichtquelle gesteuert.

Aus der US 2011/0210174 A1 ist eine optische Codeerfassung mit einer Kamera bekannt. Mit Hilfe von Infrarotpulsen wird die Anwesenheit von Objekten erkannt und deren Abstand gemessen. Die Charakteristik von Lichtpulsen für die Aufnahme der Kamera, insbesondere deren Dauer, wird an diesen Abstand angepasst.

Es ist daher Aufgabe der Erfindung, eine abstandsangepasste Beleuchtung zu verbessern.

Diese Aufgabe wird durch eine Kamera sowie ein Verfahren zum Erfassen von Bilddaten nach Anspruch 1 beziehungsweise 12 gelöst. Die Kamera umfasst einen Bildsensor zur Erfassung von Bilddaten aus dem Erfassungsbereich und eine Kamerasteuerung zur Auswertung der Bilddaten. Eine Beleuchtungsvorrichtung der Kamera weist eine oder mehrere Lichtquellen und eine Beleuchtungssteuerung auf. Damit wird die Intensität der Beleuchtung an einen Distanzwert angepasst, beispielsweise über die Bestromung der Lichtquelle. Somit wird der Erfassungsbereich in einer Umgebung des Distanzwerts ausreichend und auch nicht zu hell beleuchtet.

Die Erfindung geht von dem Grundgedanken aus, die Anpassung der Intensität eigenständig vorzunehmen. Dazu wird der Distanzwert von einem eigenen Abstandssensor gemessen, und die Beleuchtungsvorrichtung umfasst eine eigene Beleuchtungssteuerung, von der die Lichtquelle mit einer zu dem Distanzwert passenden Intensität angesteuert wird. Die Beleuchtungsvorrichtung bildet ein eigenes Modul innerhalb der Kamera, das eigenständig für die Anpassung der Beleuchtung an den Distanzwert zuständig ist. Als Abstandssensor kann ein optoelektronischer Sensor vorzugsweise nach dem Prinzip des Lichtlaufzeitverfahrens verwendet werden. Solche Sensoren sind in sehr kompakter Bauform verfügbar.

Die Erfindung hat den Vorteil, dass die Beleuchtung autark passend eingestellt wird. Die eigene Beleuchtungssteuerung sorgt für eine intelligente Beleuchtungsvorrichtung. Sie kann selbst für eine optimale Ausleuchtung der interessanten Objekte sorgen, die Unterwie Überbelichtung vermeidet und die quadratische Intensitätsabnahme mit zunehmendem Abstand ausgleicht. So lassen sich besonders hochwertige Bilder aufnehmen. Mit dem integrierten Abstandssensor ist ein äußerst kompakter Aufbau möglich.

Die Beleuchtungsvorrichtung ist als Beleuchtungsmodul und bevorzugt mit einer Leiterplatte ausgebildet, auf der Lichtquelle, Abstandssensor und Beleuchtungssteuerung untergebracht sind. Das führt zu einer besonders kompakten Bauform. Ein derartiges Beleuchtungsmodul kann sehr einfach in ein übergeordnetes System integriert werden und erfüllt dort dann autark die Funktion einer intelligenten Beleuchtung.

Die Beleuchtungssteuerung ist bevorzugt dafür ausgebildet, die Lichtquelle gepulst mit einer Frequenz zu betreiben, die das menschliche Auge als flackerfrei wahrnimmt, wobei Nutzpulse mit angepasster Intensität und Zwischenpulse ausgesandet werden. Ein Pulsbetrieb ist vorteilhaft, um ein Beleuchtungsbudget, d.h. die aus Gründen der Augensicherheit beziehungsweise der technischen Spezifikation der Lichtquelle verfügbare Beleuchtungsleistung, möglichst effizient einzusetzen. Die Pulse werden aber, insbesondere wenn sie in einer für Kameras üblichen Frequenz von 10 Hz bis höchstens 100 Hz erzeugt werden, vom menschlichen Betrachter als unangenehm empfunden. Daher ist es vorteilhaft, mit einer höheren Frequenz beispielsweise von mindestens 50 Hz oder sogar 100 Hz zu arbeiten, die das menschliche Auge beziehungsweise Gehirn nicht mehr auflöst, und dazu die benötigten Nutzpulse mit Zwischenpulsen aufzufüllen. Nur die Nutzpulse werden vorzugsweise in ihrer Intensität angepasst. Die Zwischenpulse können konstant und vergleichsweise schwach sein. Gänzlich unabhängig vom Distanzwert müssen aber auch die Zwischenpulse nicht notwendig sein, beispielsweise indem ein Beleuchtungsbudget in Abhängigkeit der jeweiligen Nutzpulse von den Zwischenpulsen ausgeschöpft wird, oder indem bei besonders schwachen Nutzpulsen für den Nahbereich auch nur besonders schwache Zwischenpulse erzeugt werden. Die Dauer der Zwischenpulse kann von derjenigen der Nutzpulse abweichen, bis hin zu dem Extremfall, dass ein Zwischenpuls die Pause zwischen zwei Nutzpulsen füllt.

Die Beleuchtungssteuerung ist bevorzugt dafür ausgebildet, abhängig von dem Distanzwert eine Höchstgrenze der Intensität einzuhalten. Die Höchstgrenze ist beispielsweise durch Augensicherheit oder eine spezifizierte Belastungsgrenze der Lichtquellen gegeben. Dank des Distanzwerts ist es nicht erforderlich, bestimmte Szenarien zu unterstellen und beispielsweise stets nur so zu beleuchten, dass selbst im extremen Nahbereich ein Auge nicht geschädigt würde. Vielmehr wird verhindert, dass eine erst in gewissem Abstand augensichere Beleuchtung versehentlich doch ein nahes Objekt trifft. Das nahe Objekt würde von dem Abstandssensor erfasst, und die Beleuchtung kann sofort entsprechend reduziert werden.

Der Abstandssensor ist bevorzugt dafür ausgebildet, mehrere Distanzwerte zu unterschiedlichen Orten im Erfassungsbereich zu bestimmen. Der Abstandssensor ist also mehrzonig beziehungsweise lateral ortsauflösend, beispielsweise durch mehrere Lichtempfangselemente, und kann eine Art Höhenprofil gewinnen. Ein vorteilhaftes Szenario ist die verlässliche Erfassung einer zu nahen Person, um deren Augen durch rechtzeitiges Abschwächen der Beleuchtung zu schützen. Deren Kopf könnte mit einem einfachen Abstandssensor übersehen oder dafür durch Mittelungseffekte ein falscher Distanzwert gemessen werden.

Die Beleuchtungssteuerung ist bevorzugt dafür ausgebildet, den Erfassungsbereich mit einer an die Distanzwerte angepassten Intensitätsverteilung zu beleuchten. Wenn der Abstandssensor ein Höhenprofil misst, dann ist auch eine differenziertere Beleuchtung entsprechend dem Höhenprofil möglich. Dazu weist die Beleuchtungsvorrichtung vorzugsweise mehrere einzeln ansteuerbare Lichtquellen auf. Es gibt aber auch andere Möglichkeiten, eine Beleuchtungsverteilung durch optische Elemente im Beleuchtungspfad zu erzeugen.

Die Kamerasteuerung ist bevorzugt dafür ausgebildet, in den Bilddaten Codebereiche zu identifizieren und deren Codeinhalt auszulesen. Damit wird die Kamera zu einem kamerabasierten Codeleser für Barcodes und/oder 2D-Codes nach diversen Standards, gegebenenfalls auch für eine Texterkennung (OCR, Optical Character Reading).

Die Beleuchtungssteuerung und die Kamerasteuerung sind voneinander unabhängig, insbesondere auf separaten Bausteinen implementiert. Die Kamerasteuerung, die üblicherweise der Hauptprozessor für Bildverarbeitungen und im Falle eines Codelesers auch dem Decoder ist, wird dadurch vollständig von der Funktion entlastet, für eine angemessene Beleuchtung zu sorgen. Getrennt bedeutet, dass die Kamerasteuerung und die Beleuchtungssteuerung unabhängig voneinander arbeiten, vorzugsweise als jeweils eigene Bausteine. Es kann dennoch Verbindungen zwischen den beiden Steuerungen geben, um beispielsweise Steuerungsbefehle oder sonstige Daten auszutauschen oder um die beiden Steuerungen miteinander zu synchronisieren. Insbesondere stellt die Beleuchtungssteuerung auf diesem Wege der Kamerasteuerung die Distanzwerte zur Verfügung, die damit beispielsweise den Fokus anpasst oder den Distanzwert im Decoder berücksichtigt.

Die Kamerasteuerung ist bevorzugt dafür ausgebildet, Bilddaten jeweils mit Nutzpulsen der Beleuchtungsvorrichtung zu erfassen. Dafür sind vorzugsweise Beleuchtungsteuerung und Kamerasteuerung miteinander synchronisiert. Die Kamera belichtet jeweils während der Nutzpulse. Die Zwischenpulse sind nicht für die Erfassung gedacht und vorzugsweise auch nicht intensitätsangepasst. Sie wären auch typischerweise zu schwach für die Erfassung eines hochwertigen Bildes.

Die Kamerasteuerung ist bevorzugt dafür ausgebildet, in Ergänzung der Anpassung der Intensität der Beleuchtung einen Verstärkungsfaktor der Bildaufnahme anzupassen. Es ist denkbar, dass das Beleuchtungsbudget und insbesondere die Augensicherheit es nicht zulässt, so stark zu beleuchten, wie das für den aktuellen Distanzwert und eine optimale Ausleuchtung erforderlich wäre. Dann kann ergänzend eine empfangsseitige Verstärkung heraufgesetzt werden, um den fehlenden Beleuchtungsanteil zu ersetzen. Diese gegenseitige Ergänzung von Beleuchtung und empfangsseitiger Verstärkung ist auch für den Fall nützlich, dass die Beleuchtungsvorrichtung noch Reserven hätte, um deren Stromverbrauch beziehungsweise thermische Belastung zu senken.

Die Kamera ist vorzugsweise stationär an einer Fördereinrichtung montiert, welche zu erfassende Objekte in einer Förderrichtung durch den Erfassungsbereich führt. Dies ist eine sehr häufige industrielle Anwendung einer Kamera. Außerdem sind die Rahmenbedingungen günstig für die einfache, verlässliche Gewinnung von Zusatzinformationen aus einem Höhenprofil. Es gibt einen bekannten, meist flachen Untergrund in festem Abstand in Form eines Förderbandes oder zumindest von Schalen oder Behältern sowie einen gleichmäßigen Objektstrom effektiv in nur einer Dimension.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Beleuchtungsvorrichtung mit einem Abstandssensor für eine an einen Distanzwert angepassten Beleuchtung;
- Fig. 2: eine schematische Schnittdarstellung einer Kamera mit einer Beleuchtungsvorrichtung gemäß Figur 1;
- Fig. 3: eine dreidimensionale Ansicht einer beispielhaften Anwendung der Kamera in Montage an einem Förderband;
- Fig. 4a: eine Darstellung von Nutz- und Zwischenpulsen einer Beleuchtungsvorrichtung;
- Fig. 4b: eine Darstellung ähnlich Figur 4a, nun mit an einen Distanzwert angepasstem Nutzpuls;
- Fig. 5: eine Darstellung ähnlich Figur 4b, wobei nun ein Anteil der erforderlichen Intensität des Nutzpulses durch eine empfangsseitige Verstärkung ersetzt wird;
- Fig. 6: eine Darstellung des Beleuchtungs- und Erfassungsbereichs einer Kamera sowie einer Intensitätsverteilung der Beleuchtung; und
- Fig. 7: eine Darstellung einer von mehreren Lichtquellen an ein Höhenprofil angepassten Beleuchtung.

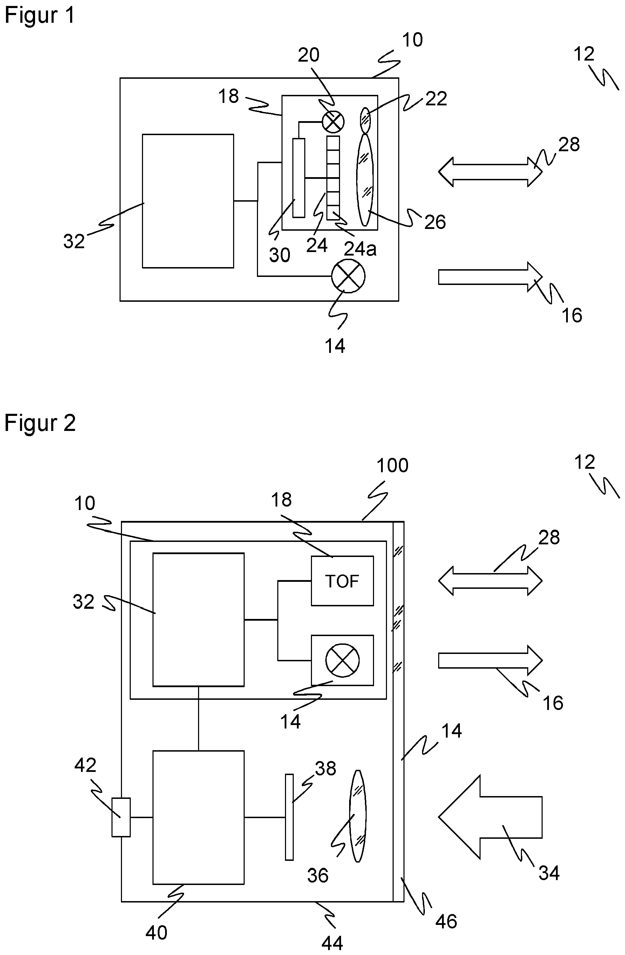

Figur 1 zeigt in einer schematischen Schnittansicht eine Beleuchtungsvorrichtung 10 zum Beleuchten eines Erfassungsbereichs 12. Dazu strahlt eine Lichtquelle 14, beispielsweise eine LED oder ein Laser, Beleuchtungslicht 16 in den Erfassungsbereich 12. Es ist vereinfachend nur eine einzelne Lichtquelle 14 gezeigt. Sie steht stellvertretend für andere Ausführungsformen mit mehrere Lichtquellen, die auch mehrfarbig und gruppenweise oder einzeln ansteuerbar sein können, sowie mit Sendeoptiken, um Parameter der Beleuchtungsvorrichtung 10 wie deren Farbe, Intensität und Richtung anzupassen.

Die Beleuchtungsvorrichtung 10 weist zudem einen optoelektronischen Abstandssensor 18 auf, der mit einem Lichtlaufzeitverfahren (ToF, Time of Flight) Abstände zu Objekten in dem Erfassungsbereich 12 misst. Der Abstandssensor 18 umfasst einen TOF-Lichtsender 20 mit TOF-Sendeoptik 22 sowie einen TOF-Lichtempfänger 24 mit TOF-Empfangsoptik 26. Damit wird ein TOF-Lichtsignal 28 ausgesandt und wieder empfangen. Eine Lichtlaufzeitmesseinheit 30 bestimmt die Laufzeit des TOF-Lichtsignals 28 und daraus den Abstand zu einem Objekt, an dem das TOF-Lichtsignal 28 zurückgeworfen wurde.

Der Aufbau des Abstandssensors 18 ist rein beispielhaft. Die optoelektronische Entfernungsmessung mittels Lichtlaufzeitverfahren ist bekannt und wird daher nicht im Einzelnen erläutert. Zwei beispielhafte Messverfahren sind Photomischdetektion mit einem periodisch modulierten TOF-Lichtsignal 28 und Pulslaufzeitmessung mit einem pulsmodulierten TOF-Lichtsignal 28. Dabei gibt es auch hochintegrierte Lösungen, in denen der TOF-Lichtempfänger 24 mit der Lichtlaufzeitmesseinheit 30 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 24, der als Matrix von SPAD-Lichtempfangselementen 24a aufgebaut ist (Single-Photon Avalanche Diode). Die TOF-Optiken 22, 26 sind nur symbolhaft als jeweilige Einzellinsen stellvertretend für beliebige Optiken wie beispielsweise ein Mikrolinsenfeld gezeigt. Alternativ ist denkbar, dass der Abstandssensor 18 Abstände mit einem anderen optischen oder nicht optischen Prinzip misst.

Eine Beleuchtungssteuerung 32 ist mit dem Abstandssensor 18 und der Lichtquelle 14 verbunden. Sie erhält die jeweils gemessenen Distanzwerte des Abstandssensors 18 und passt die Intensität der Lichtquelle 14 daran an, so dass der Erfassungsbereich 12 im Abstand des Distanzwerts ausreichend, aber auch nicht zu hell ausgeleuchtet ist. Dabei werden insbesondere Grenzen der Belastbarkeit der Lichtquelle 14 und der Augensicherheit eingehalten. Das wird vorzugsweise durch einen später noch zu beschreibenden Pulsbetrieb unterstützt. Die Beleuchtungsvorrichtung 10 kann kompakt als Modul auf einer gemeinsamen Leiterplatte untergebracht sein.

Figur 2 zeigt eine schematische Schnittdarstellung einer Kamera 100 mit einer eingebauten Beleuchtungsvorrichtung 10. Alternativ kann die Beleuchtungsvorrichtung 10 extern angeordnet werden. Empfangslicht 34 aus dem Erfassungsbereich 12 trifft auf eine Empfangsoptik 36, die das Empfangslicht 34 auf einen Bildsensor 38 führt. Die optischen Elemente der Empfangsoptik 36 sind vorzugsweise als Objektiv aus mehreren Linsen und anderen optischen Elementen wie Blenden, Prismen und dergleichen ausgestaltet, hier aber vereinfachend nur durch eine Linse repräsentiert.

Eine Kamerasteuerung 40 ist dem Bildsensor 38 verbunden und für die Steuerungs-, Auswertungs- und sonstigen Koordinierungsaufgaben in der Kamera 100 zuständig. Sie löst also Bildaufnahmen aus, liest Bilddaten des Bildsensors 38 ein, um sie zu speichern, zu verarbeiten oder an einer Schnittstelle 42 auszugeben. Vorzugsweise ist die Kamerasteuerung 40 in der Lage, Codebereiche in den Bilddaten aufzufinden und zu decodieren, womit die Kamera 100 zu einem kamerabasierten Codeleser wird. Es sind aber auch andere Bildverarbeitungen beispielsweise für Inspektions- und Messaufgaben denkbar (Machine Vision). Die Kamera 100 wird durch ein Gehäuse 44 geschützt, das im vorderen Bereich, wo das Empfangslicht 34 einfällt, durch eine Frontscheibe 46 abgeschlossen ist.

Die Beleuchtungsvorrichtung 10 ist ein eigenständiges Modul innerhalb der Kamera 100, und die Beleuchtungssteuerung 32 kümmert sich unabhängig von der Kamerasteuerung 40 um eine an den Distanzwert des Abstandssensors 18 angepasste Beleuchtung. Dazu ist vorzugsweise die Beleuchtungsvorrichtung 10 samt Lichtquelle 14, Abstandssensor 18 und Beleuchtungssteuerung 32 auf einer Beleuchtungsplatine integriert. Dadurch sind die Auswertung der Distanzwerte und die Beleuchtungsanpassung von den eigentlichen Bildverarbeitungen der Kamerasteuerung 40 separiert, und insbesondere ein Dekodiervorgang zum Lesen von Codes wird nicht beeinflusst. Dennoch sind Beleuchtungssteuerung und Kamerasteuerung 40 vorzugsweise miteinander verbunden. Dadurch kann die Kamerasteuerung 40 die Distanzwerte abfragen oder proaktiv von der Beleuchtungssteuerung zur Verfügung gestellt bekommen, etwa einmal je Bild. Außerdem können Bilderfassung und Beleuchtung miteinander synchronisiert werden.

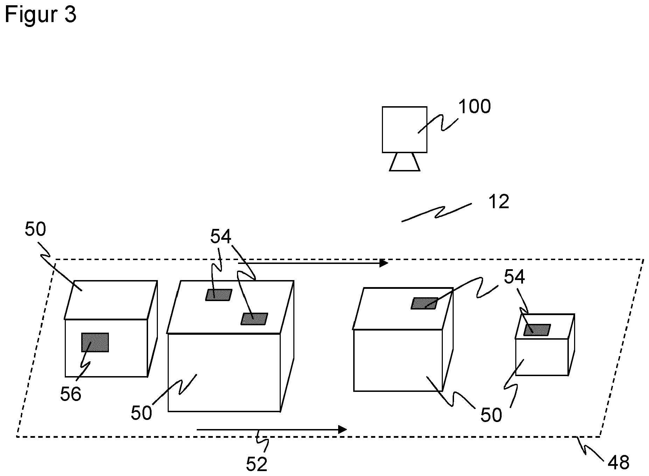

Figur 3 zeigt eine mögliche Anwendung der Kamera 100 in Montage an einem Förderband 48. Die Kamera 100 wird hier und im Folgenden nur noch als Symbol und nicht mehr mit ihrem bereits anhand der Figur 2 erläuterten Aufbau gezeigt. Das Förderband 48 fördert Objekte 50, wie durch den Pfeil 52 angedeutet, durch den Erfassungsbereich 12 der Kamera 100. Die Objekte 50 können an ihren Außenflächen Codebereiche 54 tragen. Aufgabe der Kamera 100 ist, Eigenschaften der Objekte 50 zu erfassen und in einem bevorzugten Einsatz als Codeleser die Codebereiche 54 zu erkennen, die dort angebrachten Codes auszulesen, zu dekodieren und dem jeweils zugehörigen Objekt 50 zuzuordnen. Um auch Objektseiten und insbesondere seitlich angebrachte Codebereiche 56 zu erfassen, werden vorzugsweise zusätzliche, nicht dargestellte Kameras aus unterschiedlicher Perspektive eingesetzt.

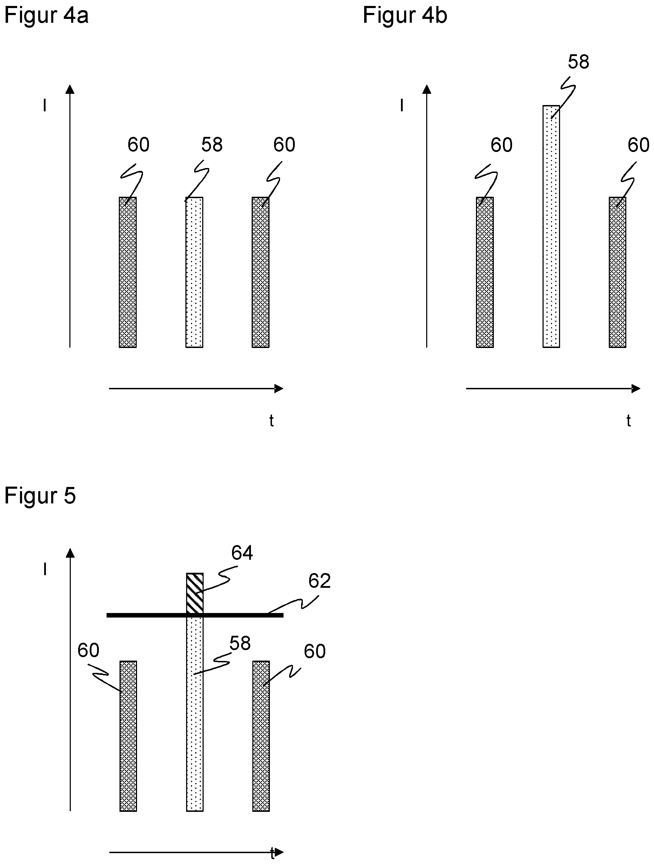

Figur 4a-b illustrieren einen bevorzugten Pulsbetrieb der Beleuchtungsvorrichtung 10. Gerade beim Codelesen, aber auch in anderen Anwendungen der Kamera 100, wird die Beleuchtung vorzugsweise gepulst betrieben, um die Helligkeit während der Belichtungszeit zu maximieren. Die Lichtquellen 14 können sowohl aus technischen Gründen als auch zur Einhaltung von Vorschriften der Augensicherheit im gepulsten Modus stärker bestromt werden als im Dauerbetrieb. Zwischen den eigentlichen Nutzpulsen 58, die vorzugsweise mit der Bildaufnahme synchronisiert sind, können Zwischenpulse 60 erzeugt werden. Für die Bilderfassung sind diese Zwischenpulse 60 irrelevant. Sie erhöhen jedoch die effektive Pulsfrequenz, die das menschliche Auge dann nicht mehr auflösen kann und so die Wahrnehmung angenehmer macht.

Figur 4a illustriert Nutzpulse 58 mit jeweils einem oder mehreren Zwischenpulsen 60 gleicher Intensität dazwischen. Erfindungsgemäß werden die Nutzpulse 58 von der Beleuchtungssteuerung 32 mit Hilfe der Distanzwerte des Abstandssensors 18 angepasst. Misst der Abstandssensor 18 einen kleineren Distanzwert zu einem nahen Objekt, so wird die Lichtquelle 14 weniger stark bestromt, entsprechend für einen größeren Distanzwert und ein fernes Objekt stärker bestromt. Es ist denkbar, auch die Zwischenpulse 60 mit gleicher und folglich angepasster Intensität auszusenden wie die Nutzpulse 58

Nun tragen aber die Zwischenpulse 60 nicht zur Bilderfassung bei, und ein Flackern wird für das menschliche Auge auch durch Zwischenpulse 60 erheblich reduziert, die schwächer sind als die Nutzpulse 58. Daher werden bevorzugt nur die Nutzpulse 58 an die Distanzwerte angepasst. Die Zwischenpulse 60 können konstant und schwächer bleiben. Diese Situation ist in Figur 4b illustriert.

Figur 5 illustriert den Fall, dass die gemäß Distanzwert gewünschte Intensität des Nutzpulses 58 von der Lichtquelle 14 nicht geleistet werden kann. Diese Obergrenze 62 der Intensität wird beispielsweise durch Einhaltung einer Spezifikation oder die Augensicherheit gesetzt. In diesem Fall wird die Intensität des Nutzpulses 58 so hoch gesetzt wie möglich. Dabei wird nicht zwingend die maximal mögliche Intensität ausgeschöpft, beispielsweise um die Leistungsaufnahme der Beleuchtungsvorrichtung 10 zu verringern.

Ein fehlender Anteil 64 kann empfangsseitig durch einen Verstärkungsfaktor einer analogen beziehungsweise digitalen Verstärkung kompensiert werden. So wird das Bild insgesamt in den gewünschten Helligkeits- oder Grauwertebereich gebracht.

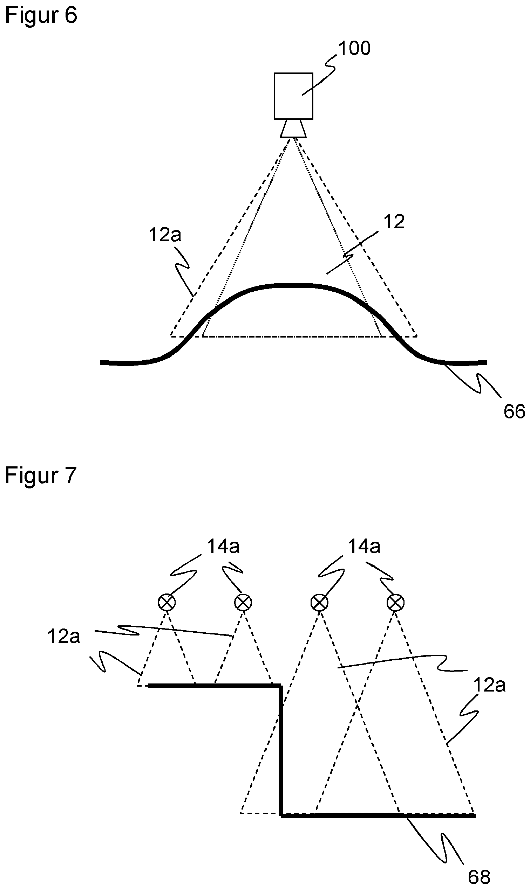

Figur 6 zeigt nochmals in einer schematischen Schnittansicht den Erfassungsbereich 12 der Kamera 100. Genaugenommen ist der Beleuchtungsbereich 12a der Beleuchtungsvorrichtung 10 damit nicht identisch. Vielmehr haben Beleuchtungsvorrichtung 10 und Kamera 100 jeweils ein eigenes Beleuchtungs- beziehungsweise Sichtfeld (Field of View). Dieser Unterschied wurde bisher nicht beachtet. In der Regel beleuchtet die Beleuchtungsvorrichtung 10 wie auch in Figur 6 zumindest denselben oder einen etwas größeren Bereich. Innerhalb des eigentlichen Erfassungsbereichs 12 der Kamera 100 ist dann überall eine ausreichende Intensität gewährleistet. Die örtliche Intensitätsverteilung der Beleuchtung ist beispielhaft durch eine Linie 66 gezeigt. Sie kann durch Referenzmessungen, Simulationen oder Berechnungen gewonnen werden. Der Sichtbereich des Abstandssensors 18 kann an diese Intensitätsverteilung angepasst werden, so dass tatsächlich repräsentative Distanzwerte gemessen werden. Damit kann eine zugleich ausreichende und nicht zu hohe Beleuchtung gewährleisten, sei es aus Gründen der Augensicherheit oder der Übersteuerung,

Figur 7 zeigt mehrere Lichtquellen 14a mit den davon einzeln beleuchteten Beleuchtungsbereichen 12a. Auf diese Weise kann auch eine lateral ortsaufgelöste Intensität der Beleuchtung eingestellt werden. Vorzugsweise sind die Lichtquellen 14a einzeln ansteuerbar. Spiegelbildlich ist der Abstandssensor 18 dann vorzugsweise ortsauflösend, misst also mehrere Distanzwerte oder ein Höhenprofil 68. Im Beispiel der Figur 7 wird das genutzt, um die beiden linken Lichtquellen 14a deutlich schwächer zu bestromen als die beiden rechten Lichtquellen 14a.

Mit einem ortsaufgelösten Abstandssensor 18 ist auch die Augensicherheit noch zuverlässiger einzuhalten. Hält beispielsweise ein Arbeiter seinen Kopf in das Sichtfeld des Abstandssensors 18, so kann die Oberfläche des Kopfes klein im Vergleich zum Sichtfeld sein. Das würde bei einem einfachen Abstandssensor 18 womöglich zu einem falschen Distanzwert und daher auch einer nicht richtig angepassten Intensität führen. In einem ortsaufgelösten Abstandssensor 18 sind solche Fehler wesentlich unwahrscheinlicher und jedenfalls kleiner.

## Patentansprüche

1. Kamera (100) mit einem Bildsensor (38) zur Erfassung von Bilddaten aus einem Erfassungsbereich (12), mit einer Kamerasteuerung (40) zur Auswertung der Bilddaten und mit einer Beleuchtungsvorrichtung (10) zum Beleuchten des Erfassungsbereichs (12), die mindestens eine Lichtquelle (14, 14a) und eine Beleuchtungssteuerung (32) aufweist, die dafür ausgebildet ist, die Intensität der Beleuchtung an einen Distanzwert anzupassen,
**dadurch gekennzeichnet,**
**dass** die Beleuchtungsvorrichtung (10) weiterhin als eigenständiges Beleuchtungsmodul ausgebildet ist, und dass die Beleuchtungssteuerung (32) Teil der Beleuchtungsvorrichtung (10) ist, die unabhängig von der Kamerasteuerung (40) eine an den Distanzwert angepasste Beleuchtung erzeugt.

2. Kamera (100) nach Anspruch 1,
wobei die Beleuchtungsvorrichtung (100) eine Leiterplatte aufweist, auf der Lichtquelle (14, 14a), Abstandssensor (18) und Beleuchtungssteuerung (32) untergebracht sind.

3. Kamera (100) nach Anspruch 1 oder 2,
wobei die Beleuchtungssteuerung (32) dafür ausgebildet ist, die Lichtquelle (14, 14a) gepulst mit einer Frequenz zu betreiben, die das menschliche Auge als flackerfrei wahrnimmt, wobei Nutzpulse (58) mit angepasster Intensität und Zwischenpulse (60) ausgesandet werden.

4. Kamera (100) nach einem der vorhergehenden Ansprüche,
wobei die Beleuchtungssteuerung (32) dafür ausgebildet ist, abhängig von dem Distanzwert eine Höchstgrenze der Intensität einzuhalten.

5. Kamera (100) nach einem der vorhergehenden Ansprüche,
wobei der Abstandssensor (18) dafür ausgebildet ist, mehrere Distanzwerte zu unterschiedlichen Orten im Erfassungsbereich (12) zu bestimmen.

6. Kamera (100) nach einem der vorhergehenden Ansprüche,
wobei die Beleuchtungssteuerung (32) dafür ausgebildet ist, den Erfassungsbereich (12) mit einer an die Distanzwerte angepassten Intensitätsverteilung zu beleuchten.

7. Kamera (100) nach einem der vorhergehenden Ansprüche,
wobei die Kamerasteuerung (40) dafür ausgebildet ist, in den Bilddaten Codebereiche (54) zu identifizieren und deren Codeinhalt auszulesen.

8. Kamera (100) nach einem der vorhergehenden Ansprüche,
wobei die Beleuchtungssteuerung (32) und die Kamerasteuerung (40) auf separaten Bausteinen implementiert sind.

9. Kamera (100) nach einem der vorhergehenden Ansprüche,
wobei die Kamerasteuerung (40) dafür ausgebildet ist, Bilddaten jeweils mit Nutzpulsen (58) der Beleuchtungsvorrichtung (10) zu erfassen.

10. Kamera (100) nach einem der vorhergehenden Ansprüche,
wobei die Kamerasteuerung (40) dafür ausgebildet ist, in Ergänzung der Anpassung der Intensität der Beleuchtung einen Verstärkungsfaktor der Bildaufnahme anzupassen.

11. Kamera (100) nach einem der vorhergehenden Ansprüche,
die stationär an einer Fördereinrichtung (489 montiert ist, welche zu erfassende Objekte (50) in einer Förderrichtung (52) durch den Erfassungsbereich (12) führt.

12. Verfahren zum Erfassen von Bilddaten aus einem Erfassungsbereich (12) mit einer Kamera (100), wobei der Erfassungsbereich (12) von einer Beleuchtungsvorrichtung (10) beleuchtet wird, deren Intensität mittels einer Beleuchtungssteuerung (32) an einen Distanzwert angepasst wird, der von einem Abstandssensor (18) der Beleuchtungsvorrichtung (10) gemessen wird, und wobei die Bilddaten in der Kamera (100) von einer Kamerasteuerung (40) ausgewertet werden,
**dadurch gekennzeichnet,**
**dass** die Beleuchtungsvorrichtung (10) als eigenständiges Beleuchtungsmodul mit der Beleuchtungssteuerung (32) als Teil der Beleuchtungsvorrichtung (10) ausgebildet ist und die Anpassung der Intensität an den Distanzwert eigenständig innerhalb der Beleuchtungsvorrichtung (10) und unabhängig von der Kamerasteuerung (40) erfolgt.
